(19) Europäisches Patentamt
European Patent Office
Office européen des brevets

(11) EP 3 872 142 A1

# (12) EUROPEAN PATENT APPLICATION

(43) Date of publication:
**01.09.2021 Bulletin 2021/35**

(51) Int Cl.:
***C09D 11/18** (2006.01)* ***C09D 11/16** (2014.01)*

(21) Application number: **20315027.1**

(22) Date of filing: **28.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Société BIC**
**92110 Clichy (FR)**

(72) Inventors:
- **CAFFIER, Guillaume**
**68290 Wegscheid (FR)**
- **LIU, Wing Yam**
**77144 Montevrain (FR)**

(74) Representative: **Peterreins Schley**
**Patent- und Rechtsanwälte PartG mbB**
**Hermann-Sack-Strasse 3**
**80331 München (DE)**

## (54) WRITING GEL INK

(57) The present disclosure relates to pens comprising a non-aqueous writing ink comprising a solvent, a coloring agent, a resin, a gelling agent, and a homo or copolymer of vinylpyrrolidone, wherein the gelling agent is a mixture of silica particles and of a fatty acid amide wax, and wherein the homo or copolymer of vinylpyrrolidone is present in amounts of between about 0.05 and about 0.6 wt.-%, relative to the total weight of the ink.

| Example | Seepage 23°C - 24h storage | Seepage 1 week storage 40°C/80% RH | Machine writing cleanliness | Machine writing regularity | Complete ink restitution | Hand writing cleanliness | Hand writing regularity | Gooping |
|---|---|---|---|---|---|---|---|---|
| Example 1 | 1.1 | 1 | 10 | 8.5 | Yes | 9.5 | 7.5 | No |
| Example 2 | 0.9 | 0.7 | 8.75 | 8.75 | Yes | 10 | 7.5 | No |
| Comparative Example 1 | 1.1 | 1.2 | 8 | 7.5 | Yes | 10 | 9.5 | Yes |
| Comparative Example 2 | 3.3 | 2 | 9 | 8.25 | Yes | 10 | 7.5 | No |
| Comparative Example 3 | 1 | 1.3 | 9.5 | 7.8 | Yes | 10 | 7.5 | No |
| Comparative Example 4 | 1.7 | 1.3 | 9 | 7.8 | Yes | 8.5 | 8.5 | Yes |
| Comparative Example 5 | 1 | 0.7 | 8.5 | 7.5 | Yes | 10 | 5 | Yes |
| Comparative Example 6 | 0.5 | 1 | 10 | 2.5 | Yes | 10 | 1.5 | No |
| Comparative Example 7 | 1.3 | 1 | 9.75 | 5 | Yes | 9.5 | 8 | Yes |
| Comparative Example 8 | 7,8 | 14,1 | 10 | 8,25 | Yes | 9 | 9 | Yes |
| Comparative Example 9 | 1,3 | 9,8 | 10 | 8,25 | No | 9 | 10 | Yes |

Fig.1



Printed by Jouve, 75001 PARIS (FR)

## Description

### Field of the Present Disclosure

The present disclosure concerns the field of writing instruments, in particular pens such as ball-pens, and writing ink for use in such writing instruments.

### Background of the Present Disclosure

Conventionally, ball pen inks are Newtonian high viscosity solvent based inks. Due to the use of glycols solvents of low volatility, ball pen inks are very stable during storage since the ink does not dry. Therefore, such inks can be used in pens without point protection. While such glycols solvent-based systems are desirable, they are typically also endowed with high shear viscosity. Again, high shear viscosity is per se not an undesirable property since it helps avoiding static leakage. Static leakage corresponds to the ink drop formation on the point when the pen is stored pointing downwards, especially in hot and humid condition. In a Newtonian system, the high shear viscosity also correlates with a viscosity at rest, and, thus, helps in reducing the problem of settling out of pigments and other solids which may clog the pen point. However, with high shear viscosities, the writing experience is not as smooth as the consumer would want. It turned out that balancing these properties was exceedingly difficult.

In order to solve these problems, the formulator turned to gel inks. Gel inks have a pseudoplastic rheological profile. In general gel inks are water based. They are a good compromise between low static leakage, smoothness and particles stabilization. However, they still suffer from several drawbacks:

Water is a light and volatile solvent. When stored without point protection (cap or hotmelt), the ink in the point can dry and clog the point. Moreover, the cap-off time of gel-ink based pens was found to be much lower as cap-off time of glycol-based ball pens.

Despite the use of corrosion inhibitors, water-based inks remain corrosive fluids. It is therefore impossible to use brass points and it is mandatory to use stainless steel points which are quite expensive materials and difficult to manufacture due to material hardness.

Furthermore, with water being a bad lubricant, it is also mandatory to use points with strong flow. For typical pens, it was found that the flow of a ball pen with a water-based ink could not be lowered to less than about 300 mg/200 m. This compares unfavorably to a glycol-based ink with about 35 mg/200 m. As a result, the mileage (i.e. total length of writing of the pen) of water-based ink pens is much lower than the mileage of glycol-based inks pens.

Glycol-based inks, or more generally solvent-based inks, for ball pens have also been described in the prior art. In particular, JP3078172 and JPH07-196972 describe the use of fatty acid amide wax in an oily ink composition as a thixotropic agent. However, use of fatty amid waxes alone is not sufficient to avoid the static leakage of the ink. In WO 2019/122017 A1, this technical problem is addressed by using a combination of fatty acid amide wax and silica particles are used as the gelling agent.

However, there is still room for further improvement of solvent-based inks for ink pens, in particular when it comes to balancing the rheological properties of the ink to achieve both excellent writing performance and avoiding leakage of the ink from the pen both after dynamic situations (e.g. after writing or after shock events such as dropping the pen) and in static situations (e.g. storing the pen on a shelf or storing the pen under heat and humidity such as encountered when keeping the pen close to the human body in a pocket). In particular, the problem of gooping, i.e. undesirable leakage from the pen tip immediately after writing, remains an issue.

### Summary of the Present Disclosure

In a first aspect, the present disclosure relates to a writing instrument. The writing instrument may be a pen, in particular a ball-pen. The writing instrument may contain a non-aqueous writing ink. The non-aqueous writing ink may comprise a solvent, a coloring agent, a resin, a gelling agent, and a homo or copolymer of vinylpyrrolidone. The gelling agent may comprise a mixture of silica particles and of a fatty acid amide wax. The homo or copolymer of vinylpyrrolidone may be present in amounts of between 0.05 and 0.6 wt.-%, relative to the total weight of the ink.

In some embodiments, the homo or copolymer of vinylpyrrolidone may be polyvinylpyrrolidone.

In some embodiments, the homo or copolymer of vinylpyrrolidone may be polyvinylpyrrolidone having a weight-average molecular weight of above about 200 kDa, specifically between about 400 and about 2300 kDa, more specifically between about 450 and about 2000 kDa, and in particular between about 600 and about 1900 kDa.

In some embodiments, the amount by weight of the homo or copolymer of vinylpyrrolidone, in particular polyvinylpyrrolidone, may be lower than the amount by weight of the mixture of silica particles and of fatty acid amide wax.

In some embodiments, the silica particles may comprise hydrophilic silica particles. In some embodiments, the hydrophilic silica particles may be present in an amount of between about 0.10 and about 0.60 wt.-%, relative to the

total weight of the ink.

In some embodiments, the fatty acid amide wax may comprise an N,N'-ethylene-bis-fatty acid amide. In some embodiments, it may be advantageous that the fatty acid amide wax may comprise an octadecanamide of the following formula (I)

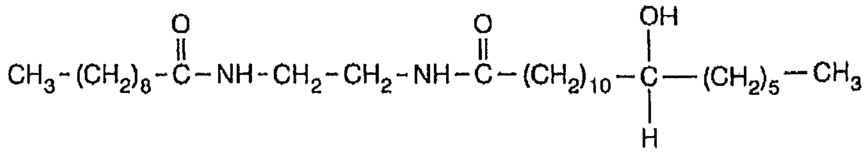

(I).

In some embodiments, the gelling agent may be present in amounts of between about 0.1 and about 1.2 wt.-%, more specifically between about 0.15 and about 0.60 wt.-%, relative to the total weight of the ink.

In some embodiments, the solvent may be selected from the group consisting of glycol ethers, alcohols, and mixture thereof. It may be advantageous that the solvent is selected from polyethylene glycol ethers, polypropylene glycol ethers, phenoxyethanol, 1-phenoxy-2-propanol, or mixtures thereof.

In some embodiments, the solvent may be present in amounts of between about 35 and about 80 wt.-%, relative to the total weight of the ink. In some embodiments, it may be advantageous that the solvent is present in amounts between about 45 and about 75 wt.-%, relative to the total weight of the ink.

In some embodiments, the coloring agent may be a dye, in particular a dye selected from the group consisting of azoic dyes, triarylmethane dyes, phthalocyanine derivatives dyes, xanthene dyes and mixture thereof.

In some embodiments, the coloring agent may be present in amounts of between about 5 and about 30 wt.-%, in particular between about 7 and about 28 wt.-%, relative to the total weight of the ink.

In some embodiments, the non-aqueous writing ink may further comprise one or more additives. In some embodiments, the additive may be a further gelling agent. In some embodiments, it may be advantageous that the non-aqueous writing ink further comprises one or more additives selected from the group consisting of thickening agents, clear drain agents, viscosity imparting agents, lubricants, dispersing agents and mixtures thereof.

In some embodiments, the non-aqueous writing ink may comprise in amounts relative to the total weight of the ink: between about 0.1 and about 0.6 wt.-% polyvinylpyrrolidone having a weight-average molecular weight of between about 450 and about 2000 kDa; between about 0.15 and about 0.60 wt.-% of the fatty acid amide wax; and between about 0.15 and about 0.60 wt.-% hydrophilic silica.

In some embodiments, the non-aqueous writing ink may comprise a resin selected from polyester resins, polyurethane resins, ketone resins, ether resins, and mixtures thereof. It may be advantageous that the resin is a ketone resin. Additionally or alternatively, the resin may be present in an amount of between about 3 and about 30%, specifically between about 3 and about 25%, and in particular between about 5 to about 20%, relative to the total weight of the ink. Alternatively, the ink may comprise between about 55 and about 75 wt.-% of 1-phenoxy-2-propanol. It may also be advantageous that fatty acid amide wax of the non-aqueous writing ink comprises an N,N'-ethylene-bis-fatty acid amide, in particular an octadecanamide of the following formula (I)

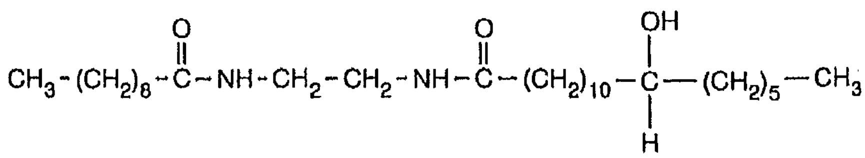

(I).

In some embodiments, the ink may have a loss factor tan $\delta$ at rest of between about 3 and about 15, more specifically between about 4 and about 12, and in particular between about 5 and about 10. Additionally or alternatively, the ink may have a loss factor after shear of between about 8 and about 60, more specifically between about 11 and about 50, and in particular between about 15 and about 40.

In some embodiments, the non-aqueous writing ink may consist of the following components in amounts relative to the total weight of the ink: about 55 to about 75 wt.-% of the solvent is selected from a polyethylene glycol ether, a polypropylene glycol ether, phenoxyethanol, 1-phenoxy-2-propanol, or mixtures thereof; about 10 to about 30 wt.-% of the coloring agent; about 0.10 to about 0.60 wt.-% polyvinylpyrrolidone having a weight-average molecular weight of between about 600 and about 1900 kDa; about 0.15 to about 0.60 wt.-% fatty acid amide wax; about 0.15 to about 0.60 wt.-% hydrophilic silica; and the remainder of components being selected from resins and additives.

In some embodiments, the non-aqueous writing ink may comprise or may consist of the following components

in amounts relative to the total weight of the ink: about 55 to about 75 wt.-% of the 1-phenoxy-2-propanol; about 10 to about 30 wt.-% of the coloring agent; about 0.10 to about 0.60 wt.-% polyvinylpyrrolidone having a weight-average molecular weight of between about 600 and about 1900 kDa; about 0.15 to about 0.60 wt.-% fatty acid amide wax comprising a N,N'-ethylene-bis-fatty acid amide, in particular a N,N'-ethylene-bis-fatty acid amide having the following formula (I)

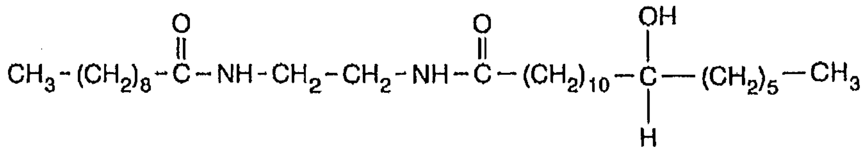

(I);

about 0.15 to about 0.60 wt.-% hydrophilic silica; about 5 to about 15 wt.-% of a resin; and the remainder of components being additives, in particular the additives defined above.

In a second aspect, the present disclosure relates to a non-aqueous writing ink comprising a solvent, a coloring agent, a resin, a gelling agent, and a homo or copolymer of vinylpyrrolidone, wherein the gelling agent is a mixture of silica particles and of a fatty acid amide wax, and wherein the homo or copolymer of vinylpyrrolidone is present in amounts of between about 0.05 and about 0.6 wt.-%, relative to the total weight of the ink.

The embodiments recited for the above first aspect of the disclosure are equally combinable with the aforementioned second aspect of the disclosure.

In a third aspect, the present disclosure relates a process of preparing the writing instrument according to the first aspect of the present disclosure or a non-aqueous writing ink according to second aspect of the present disclosure. The non-aqueous writing ink may be prepared by the following steps: a) Forming a first premix comprising silica particles in a solvent. The temperature in this step may be between about 30 and about 70°C. The first premix may be mixed with a shear rate of between about 20 and about 25 m/s. b) Combining the first premix with the remainder of the components of the non-aqueous writing ink.

In some embodiments, the non-aqueous writing ink may be prepared by the following steps: a) Forming a first premix comprising silica particles in a solvent. The temperature in this step may be between about 30 and about 70°C. The first premix may be mixed with a shear rate of between about 20 and about 25 m/s. b) Forming a second premix comprising fatty acid amide wax in a solvent. The temperature in this step may be between about 30 and about 70°C. The second premix may be mixed with a shear rate of between about 20 and about 25 m/s. c) Combining the first and second premixes with the remainder of the components of the non-aqueous writing ink.

The embodiments recited for the above first aspect of the disclosure are equally combinable with the aforementioned third aspect of the disclosure.

## Description of the Figure

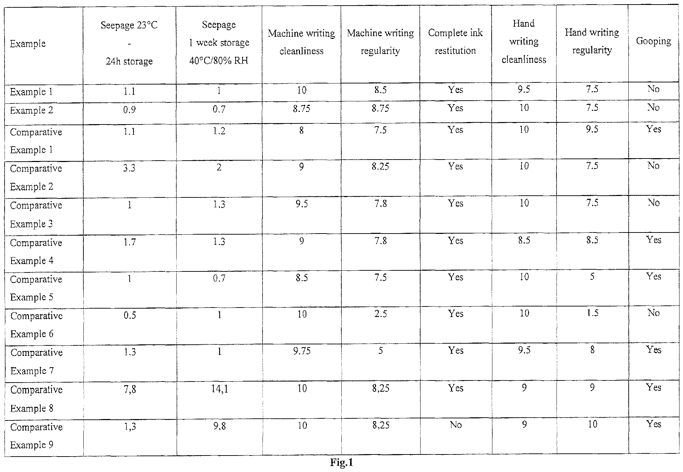

Fig. 1 summarizes the performance of Examples 1 and 2 and Comparative Examples 1 to 9

## Detailed Description of the Present Disclosure

Hereinafter, a detailed description will be given of the present disclosure. The terms or words used in the description and the claims of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

In a first aspect, the present disclosure relates to a writing instrument. The writing instrument may be a pen, in particular a ball-pen. The writing instrument may contain a non-aqueous writing ink. In this context, non-aqueous means that the ink does not comprise water as a solvent for dyes/pigments and/or may be substantially free (e.g. containing less than about 2 wt.-% with respect to the total weight of the ink) or free of water.

The non-aqueous writing ink may comprise a solvent, a coloring agent, a resin, a gelling agent, and a homo or copolymer of vinylpyrrolidone. The gelling agent may comprise a mixture of silica particles and of a fatty acid amide wax. It should be understood that the presence of further gelling agents is not excluded and that one or more further gelling agents can be optionally added to the ink.

The homo or copolymer of vinylpyrrolidone may be present in amounts of between about 0.05 and about 0.6 wt.-%, more specifically between about 0.08 and about 0.5 wt.-%, even more specifically between about 0.1 wt.-% and

about 0.4 wt.-%, and in particular between about 0.10 wt.-% and about 0.35 wt.-%, relative to the total weight of the ink. It was surprisingly found that the addition of a select amount of a homo or copolymer of vinylpyrrolidone, in particular the addition of a polyvinylpyrrolidone having a weight-average molecular weight of above about 200 kDa, specifically between about 400 and about 2300 kDa, more specifically between about 450 and about 2000 kDa, and in particular between about 600 and about 1900 kDa, to the aforementioned non-aqueous writing ink provides an exceptionally balanced writing and storage performance. The effect will be further elaborated in the below example section. Without wishing to be bound by theory, it is assumed that the fatty acid amide wax creates a gelling network with the solvent which is mediated by hydrogen bonds. Again without wishing to be bound by theory, the ability of homo or copolymers of vinylpyrrolidone to accept hydrogen bonds from that gelling network while not contributing hydrogen bonds to the network itself is believed to introduce an "elasticity" to the ink that does not depend on the shear. This effect is believed to provide the aforementioned exceptionally balanced writing and storage performance. Of note, the effect was found to be dependent on the concentration of the homo or copolymer of vinylpyrrolidone with amounts of above 0.6 wt.-%, relative to the total weight of the ink, being detrimental to the writing performance.

In some embodiments, the homo or copolymer of vinylpyrrolidone may have a weight-average molecular weight of above about 200 kDa, specifically between about 400 and about 2300 kDa, more specifically between about 450 and about 2000 kDa, and in particular between about 600 and about 1900 kDa.

In some embodiments, the homo or copolymer of vinylpyrrolidone may be polyvinylpyrrolidone. It may be advantageous that the polyvinylpyrrolidone has a weight-average molecular weight of above about 200 kDa, specifically between about 400 and about 2300 kDa, more specifically between about 450 and about 2000 kDa, and in particular between about 600 and about 1900 kDa.

As indicated, the gelling agent may comprise a mixture of silica particles and of a fatty acid amide wax. The term "mixture" is not particularly limited and is intended to refer to any combination comprising silica particles and a fatty acid amide wax. In some embodiments, it may be advantageous to premix the silica particles and of a fatty acid amide wax. Suitable processes for doing this will be elaborated further below.

In some embodiments, the silica particles may comprise silica particles. It may be advantageous that the silica particles are hydrophilic silica particles. It may be advantageous that the silica particles are fumed silica particles, in particular hydrophilic fumed silica particles, such as the product sold by Evonik under the trade name AEROSIL® 200.

In some embodiments, the non-aqueous writing ink may comprise dispersed silica particles or silica-based gel-like particles wherein the average particle size is less than about 1 μm, more specifically less than about 0.9 μm, in particular less than about 0.8 μm using dynamic light scattering (DLS) such as Malvern Zetasizer ZS.

The use of fatty acid amide waxes is well-established in the art as *i.a.* rheology-modifying agents. Suitable fatty acid residues may include aliphatic carboxylic acids having more than about 6 carbon atoms, in particular about 6 to about 24 carbon atoms, or about 6 to about 18 carbon atoms. Said aliphatic carboxylic acids may optionally be substituted, in particular with hydroxyl groups. Examples of suitable fatty acid residues include residues derived from caprylic acid, capric acid, lauric acid, myristic acid, palmitic acid, stearic acid, hydroxystearic acid, arachidic acid, and behenic acid.

In some embodiments, the fatty acid amide wax is a fatty acid diamide wax. The fatty acid diamide wax may comprise a fatty acid diamide comprising two fatty acid residues of about 6 or more carbon atoms, in particular of about 6 to about 24 carbon atoms, or about 6 to about 18 carbon atoms, which may optionally be substituted, in particular with hydroxyl groups. It may be advantageous that the fatty acid diamide wax comprises an N,N'-alkylene moiety having between 1 and about 12 carbon atoms, in particular between 1 and about 6 carbon atoms, in particular between about 2 to about 4 carbon atoms. It may be particularly advantageous that the fatty acid diamide wax comprises an N,N'-ethylene-bis-fatty acid amide, in particular wherein the two fatty acid residues independently of each other comprise about 6 or more carbon atoms, in particular about 6 to about 24 carbon atoms, or about 6 to about 18 carbon atoms. Each of the fatty acid residues may further and independently from each other be substituted, in particular with hydroxyl groups.

In some embodiments, it may be advantageous that the fatty acid amide wax may comprise 12-hydroxy-N-[2-[(1-oxooctyl)amino]ethyl]octadecanamide; N,N'-1,2-ethylene bis(12-hydroxy-octadecanamide); N,N'-1,2-ethylene bis(12-hydroxyoctadecanamide); N,N'-ethylene bis(12-hydroxystearamide); N,N'-ethylene bis(caprylamide), or mixtures thereof.

In some embodiments, it may be advantageous that the fatty acid amide wax may comprise an octadecanamide of the following formula (I)

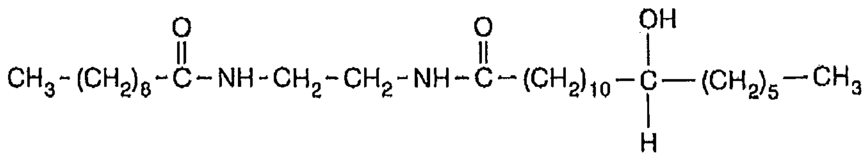

(I).

In some embodiments, the gelling agent may be present in amounts of between about 0.1 and about 1.2 wt.-%, more specifically between about 0.15 and about 0.60 wt.-%, relative to the total weight of the ink.

In some embodiments, the hydrophilic silica particles may be present in an amount of between about 0.10 and about 0.60 wt.-%, relative to the total weight of the ink.

In some embodiments, the fatty acid amide wax may be present in an amount of between about 0.10 and about 0.60 wt.-%, relative to the total weight of the ink.

In some embodiments, the amount by weight of the homo or copolymer of vinylpyrrolidone, in particular polyvinylpyrrolidone, may be lower than the amount by weight of the mixture of silica particles and of fatty acid amide wax.

The non-aqueous writing ink may comprise a solvent. The term "solvent" is not intended to be particularly limiting and also includes *i.a.* a medium which disperses or suspends solid components such as pigments. In some embodiments, the solvent may be selected from the group consisting of glycol ethers, alcohols, and mixture thereof. It may be advantageous that the solvent is selected from polyethylene glycol ethers, polypropylene glycol ethers, phenoxyethanol, 1-phenoxy-2-propanol, or mixtures thereof. In some embodiments, the alcohol is a alcohol having a high boiling point such as boiling point of above about 130°C, above about 150°C, or above about 200°C. In some embodiments, the alcohol may be selected form the group consisting of benzyl alcohol, ethylene glycol, diethylene glycol, propylene glycol, dipropylene glycol, trimethylene glycol, glycerin, and mixtures thereof. It may be particularly advantageous that the alcohol is benzyl alcohol. In another embodiment the solvent may be a glycol ether having a high boiling point such as boiling point of above about 130°C, above about 150°C, or above about 200°C. It may be advantageous that the glycol ether is selected from the group consisting of diethylene glycol monoethyl ether, diethylene glycol mono butyl ether, dipropylene glycol monobutyl ether, tripropylene glycol monomethyl ether, phenoxyethanol, phenoxypropanol, and mixtures thereof. It may be particularly advantageous that the glycol ether is selected from the group consisting of phenoxyethanol, 1-phenoxy-2-propanol and mixture thereof.

In some embodiments, the solvent may be present in amounts of between about 35 and about 80 wt.-%, relative to the total weight of the ink. In some embodiments, it may be advantageous that the solvent is present in amounts between about 45 and about 75 wt.-%, relative to the total weight of the ink.

In some embodiments, it may be advantageous that the ink comprises between about 55 and about 75 wt.-% of 1-phenoxy-2-propanol.

In some embodiments, the coloring agent may be a dye, a pigment, or mixtures thereof, in particular a dye or pigment selected from the group consisting of azoic dyes, triarylmethane dyes, phthalocyanine derivative dyes, xanthene dyes and mixture thereof. In some embodiments, the colorant may be a pigment.

Examples of a dye usable in the ink according to the present disclosure include the following: VARIFAST Black 3806 (C.I. Solvent Black 29), 3807 (trimethyl benzyl ammonium salt of C.I. Solvent Black 29), Spirit Black SB (C.I. Solvent Black 5), SPIRON Black GMH (C.I. Solvent Black 43), Solvent Black 46 (salt forming from of C.I. Basic Violet 3 and Acid Yellow 36), VARIFAST Red 1308 (salt forming form of C.I. Basic Red 1 dye and C.I. Acid Yellow 23 dye), Solvent Red 49, VARIFAST Yellow AUM (salt forming form of C.I. Basic Yellow 2 dye and C.I. Acid Yellow 42 dye), SPIRON Yellow C2 GH (organic acid salt of C.I. Basic Yellow 2), SPIRON Violet CRH (C.I. Solvent Violet 8-1), VARIFAST Violet 1701 (salt forming form of C.I. Basic Violet 1 and C.I. Acid Yellow 42 dye), SPIRON Red CGH (organic acid salt of C.I. Basic Red 1), SPIRON Pink BH (C.I. Solvent Red 82), Nigrosine Base EX (C.I. Solvent Black 7), Oil Blue 613 (C.I. Solvent Blue 5), and Neozapon Blue 808 (C.I. Solvent Blue 70).

In some embodiments, the coloring agent may be a dye and may be selected from also a salt-forming dye and mixtures thereof, such as: Solvent Black 46 (salt forming from of C.I. Basic Violet 3 and Acid Yellow 36), VARIFAST Red 1308 (salt forming form of C.I. Basic Red 1 dye and C.I. Acid Yellow 23 dye), VARIFAST Yellow AUM (salt forming form of C.I. Basic Yellow 2 dye and C.I. Acid Yellow 42 dye), VARIFAST Violet 1701 (salt forming form of C.I. Basic Violet 1 and C.I. Acid Yellow 42 dye).

Examples of a pigments usable in the ink according to the present disclosure include organic, inorganic and processed pigments. Thus, the pigment may for example be an inorganic pigment such as a carbon black, ultramarine and titanium dioxide pigment, an organic pigment such as an azo-based pigment, phthalocyanine-based pigment, indigo pigment, thioindigo pigment, thren-based pigment, quinacridone-based pigment, anthraquinone-based pigment, thron-based pigment, diketopyrrolopyrrole-based pigment, dioxazine-based pigment, perylene-based pigment, perinone-based pigment and isoindolinone-based pigment, a metal pigment such as an aluminum powder or aluminum powder whose surface is treated with a colored resin, a metal gloss pigment obtained by forming a metal vapor deposition film such as that of aluminum on a transparent or colored transparent film, a metal pigment having a thickness of about 0.01 to about 0.1 μm obtained by peeling a metal vapor deposition film such as that of aluminum formed on a substrate such as a film, a colloidal particle having a mean particle size of about 5 to about 30 nm selected from gold, silver, platinum and copper, a fluorescent pigment, light-storing pigment, pearl pigment obtained by coating the surface of a core which is a naturally occurring mica, synthetic mica, glass flake, alumina and transparent film with a metal oxide such as titanium oxide, and the like.

In some embodiments, the coloring agent may be present in amounts of between about 5 and about 30 wt.-%, in particular between about 7 and about 28 wt.-%, relative to the total weight of the ink.

In some embodiments, the non-aqueous writing ink may further comprise one or more additives. In some embodiments, the additive may be a further gelling agent. In some embodiments, it may be advantageous that the non-aqueous writing ink further comprises one or more additives. In some embodiments, the additives may be selected from the group consisting of thickening agents, clear drain agents, viscosity imparting agents, lubricants, dispersing agents and mixtures thereof.

In some embodiments, the non-aqueous writing ink may comprise in amounts relative to the total weight of the ink: between about 0.1 and about 0.6 wt.-% polyvinylpyrrolidone having a weight-average molecular weight of between about 450 and about 2000 kDa; between about 0.15 and about 0.60 wt.-% of the fatty acid amide wax; and between about 0.15 and about 0.60 wt.-% hydrophilic silica.

The non-aqueous writing ink may comprise a resin. The resin may impart viscosity to the ink and/or may act as a binder. It may be a natural or synthetic resin. The resin may comprise a polyester resin; a polyurethane resin; a ketone resin such as a ketone-formaldehyde resin such as an acetophenone-formaldehyde modified resin; an ether resin; a vinyl resin, such as a vinyl chloride copolymer, polyvinyl butyral, a polyvinyl acetate, vinyl acetate copolymer, or a polyvinyl alcohol resin; an acrylic resin; a styrene-acrylic resin; a styrene-maleic acid copolymer resin; a rosin-maleic acid copolymer resin; a phenol resin; a cellulosic resin; an amid resin, an alkyd resin, a rosin-modified resin, a rosin-modified phenol resin; a xylene resin; a polyacetal resin; a terpene resin; a phenoxy resin; or a mixture thereof. In some embodiments, it may be advantageous that the resin selected from polyester resins, polyurethane resins, ketone resins, ether resins, and mixtures thereof. It may be particularly advantageous that the resin is a ketone resin.

In some embodiments, the resin may be present in an amount of between about 3 and about 30%, specifically between about 3 and about 25%, and in particular between about 5 to about 20%, relative to the total weight of the ink.

In some embodiments, the non-aqueous writing ink may comprise or consist of the following components in amounts relative to the total weight of the ink: about 55 to about 75 wt.-% of the solvent is selected from a polyethylene glycol ether, a polypropylene glycol ether, phenoxyethanol, 1-phenoxy-2-propanol, or mixtures thereof; about 10 to about 30 wt.-% of the coloring agent; about 0.10 to about 0.60 wt.-% polyvinylpyrrolidone having a weight-average molecular weight of between about 600 and about 1900 kDa; about 0.15 to about 0.60 wt.-% fatty acid amide wax; about 0.15 to about 0.60 wt.-% hydrophilic silica; and the remainder of components being selected from the resins and additives.

In some embodiments, the non-aqueous writing ink may comprise or may comprise or consist of the following components in amounts relative to the total weight of the ink: about 55 to about 75 wt.-% of the 1-phenoxy-2-propanol; about 10 to about 30 wt.-% of the coloring agent; about 0.10 to about 0.60 wt.-% polyvinylpyrrolidone having a weight-average molecular weight of between about 600 and about 1900 kDa; about 0.15 to about 0.60 wt.-% fatty acid amide wax comprising a N,N'-ethylene-bis-fatty acid amide, in particular a N,N'-ethylene-bis-fatty acid amide having the following formula (I)

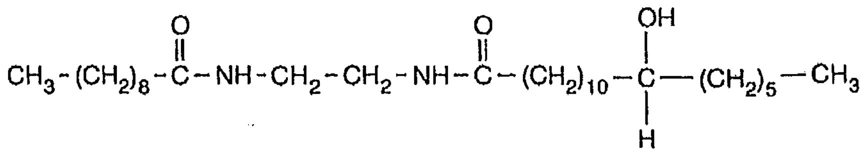

(I);

about 0.15 to about 0.60 wt.-% hydrophilic silica; about 5 to about 15 wt.-% of resin; and the remainder of components being additives, in particular the additives defined above.

In some embodiments, the non-aqueous writing ink may have a viscosity at rest at about 20 °C of between about 30 000 cps and about 150 000 cps, more specifically between about 40 000 cps and about 120 000 cps, and in particular between about 50 000 cps and about 100 000 cps. The viscosity at rest may be measured at about 20°C with a cone-and-plate rheometer such as a rheometer by Malvern Kinexus with a cone of about 40 mm and an angle of about 4° with a shear rate of 0.01 $s^{-1}$.

In some embodiments, the non-aqueous writing ink may have a viscosity under shear at about 100 $s^{-1}$ at about

20 °C of between about between about 1200 cps and about 10 000 cps, more specifically between about 1300 cps and about 5 000 cps, and in particular between about 1500 cps and about 4000 cps. The viscosity under shear may be measured at about 20°C with a cone-and-plate rheometer such as a rheometer by Malvern Kinexus with a cone of about 40 mm and an angle of about 4° with a shear rate of 100 $s^{-1}$.

In some embodiments, the non-aqueous writing ink may have a loss factor tan $\delta$ at rest of between about 3 and about 15, more specifically between about 4 and about 12, and in particular between about 5 and about 10. The loss factor tan $\delta$ at rest may be measured at about 20°C with a cone-and-plate rheometer such as a rheometer by Malvern Kinexus with a cone of about 40 mm and an angle of about 4° with an oscillation measurement (frequency = about 1 Hz, shear about 20 Pa).

In some embodiments, the non-aqueous writing ink may have a loss factor tan after shear of between about 8 and about 60, more specifically between about 11 and about 50, and in particular between about 15 and about 40. The loss factor tan $\delta$ after shear may be measured at about 20°C with a cone-and-plate rheometer such as a rheometer by Malvern Kinexus with a cone of about 40 mm and an angle of about 4° with an oscillation measurement (frequency = about 1 Hz, shear about 20 Pa) after pre-shearing the sample (to simulate the writing process) for about 30 seconds at about 1000 $s^{-1}$.

In a second aspect, the present disclosure relates to a non-aqueous writing ink comprising a solvent, a coloring agent, a resin, a gelling agent, and a homo or copolymer of vinylpyrrolidone, wherein the gelling agent is a mixture of silica particles and of a fatty acid amide wax, and wherein the homo or copolymer of vinylpyrrolidone is present in amounts of between about 0.05 and about 0.6 wt.-%, relative to the total weight of the ink.

The embodiments recited for the above first aspect of the disclosure are equally combinable with the aforementioned second aspect of the disclosure. In particular, it may be advantageous that the non-aqueous writing ink may comprise or consist of the following components in amounts relative to the total weight of the ink: about 55 to about 75 wt.-% of the solvent is selected from a polyethylene glycol ether, a polypropylene glycol ether, phenoxyethanol, 1-phenoxy-2-propanol, or mixtures thereof; about 10 to about 30 wt.-% of the coloring agent; about 0.10 to about 0.60 wt.-% polyvinylpyrrolidone having a weight-average molecular weight of between about 600 and about 1900 kDa; about 0.15 to about 0.60 wt.-% fatty acid amide wax; about 0.15 to about 0.60 wt.-% hydrophilic silica; and the remainder of components being selected from the resins and additives. More specifically, it may be advantageous that the non-aqueous writing ink may comprise or consist of the following components in amounts relative to the total weight of the ink: about 55 to about 75 wt.-% of the 1-phenoxy-2-propanol; about 10 to about 30 wt.-% of the coloring agent; about 0.10 to about 0.60 wt.-% polyvinylpyrrolidone having a weight-average molecular weight of between about 600 and about 1900 kDa; about 0.15 to about 0.60 wt.-% fatty acid amide wax comprising a N,N'-ethylene-bis-fatty acid amide, in particular a N,N'-ethylene-bis-fatty acid amide having the following formula (I)

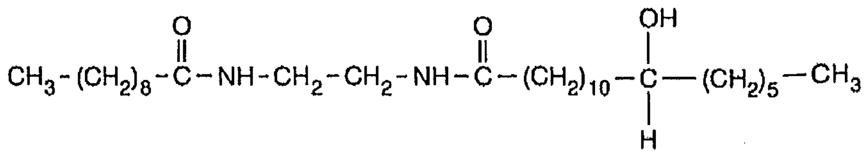

(I);

about 0.15 to about 0.60 wt.-% hydrophilic silica; about 5 to about 15 wt.-% of resin; and the remainder of components being additives, in particular the additives defined above.

In a third aspect, the present disclosure relates a process of preparing the writing instrument according to the first aspect of the present disclosure or a non-aqueous writing ink according to second aspect of the present disclosure. The process is not particularly limited.

Accordingly, in some embodiments, the non-aqueous writing ink may be prepared by the following steps: In one step, a first premix comprising silica particles in a solvent is formed. The temperature in this step may be between about 30 and about 70°C. The first premix may be mixed with a shear rate of between about 20 and about 25 m/s. In another step, a second premix comprising fatty acid amide wax in a solvent is formed. The temperature in this step may be between about 30 and about 70°C. It should be understood that the steps of forming the first premix can be performed with only a part of the solvent contained in the final writing ink. Then, the first premix may be combined with the remainder of the components of the writing ink.

However, in some embodiments, it may be advantageous that the fatty acid amide wax is activated by formation of a premix in a solvent (second premix), advantageously the solvent as described above for the ink, in particular a glycol ether, before its addition in the writing ink containing the (remainder of the) solvent and the coloring agent, the silica particles and optionally additives. Without wishing to be bound by theory, it is believed that such activation may allow the spreading of the fatty acid amide wax and therefore the obtaining of a stronger gel network. Advantageously the activation step (formation of a premix) may be carried out at a precise temperature and shear stress.

Accordingly, in some embodiments, the non-aqueous writing ink may be prepared by the following steps: In one step, a first premix comprising silica particles in a solvent is formed. The temperature in this step may be between about 30 and about 70°C. The first premix may be mixed with a shear rate of between about 20 and about 25 m/s. In another step, a second premix comprising fatty acid amide wax in a solvent is formed. The temperature in this step may be between about 30 and about 70°C. The second premix may be mixed with a shear rate of between about 20 and about 25 m/s. It should be understood that the steps of forming the first and second premixes can be performed with only a part of the solvent contained in the final writing ink. Then, the first and second premixes may be combined with the remainder of the components of the writing ink.

In order to obtain a premix, a rotor-stator disperser can be used. The activation of the fatty acid amide wax may be observed by measuring viscosity at rest of the premix. When activation is complete, viscosity at rest is maximal (spreading the fatty acid amide wax increases the viscosity at rest).

The embodiments recited for the above first aspect of the disclosure are equally combinable with the aforementioned third aspect of the disclosure.

In the following the present disclosure will be further elaborated by way of Examples.

**Examples**

**Measuring Methods**

Measurements on inks and pens were carried out as follows:

1. Measurement of rest viscosity

The viscosity of the ink has been measured at 20°C with a cone-and-plate rheometer Malvern Kinexus with a cone of 40 mm and an angle of 4° with a shear rate of 0.01 $s^{-1}$.

2. Measurement of shear viscosity

The viscosity of the ink has been measured at 20°C with a cone-and-plate rheometer Malvern Kinexus with a cone of 40 mm and an angle of 4° with with a shear rate of 100 $s^{-1}$.

3. Determination of shear thinning index

Mathematical formula : Shear thinning index = (Measurement of rest viscosity 0.01$s^{-1}$ at 20° CP 4°/40 mm) / (Measurement of rest viscosity 100 $s^{-1}$ at 20° CP 4°/40 mm)

4. Measurement of tan delta at rest

The measurement was performed with a cone-and-plate rheometer Malvern Kinexus with a cone of 40 mm and an angle of 4° and with an oscillation measurement (Frequency = 1 Hz, Shear 20 Pa).

5. Measurement of tan delta after shear at 1000$s^{-1}$

The measurement was performed with a cone-and-plate rheometer Malvern Kinexus with a cone of 40 mm and an angle of 4° after pre-shearing the sample (to simulate the writing process) for about 30 seconds at about 1000 $s^{-1}$.

6. Seepage 23°C - 24h storage

This test measures the amount of ink that will leak from the point of a ball pen when it is stored pointing downwards for one day at 23°C. The process was as carried out as follows (test on 10 pens):

1. Ball pen start = make pen write to decrease its viscosity.

2. Wipe ink from the point with non fluffy paper
3. Store the Ball pen 24 hours point down at 23°C / 50% RH
4. Transfer ink drop from the pen point to a paper. Rotate the point of each pen on the test sheet 360°, transferring any ink seepage to the test sheet.
5. Cover the seepage display with a strip of transparent tape
6. Spread the ink stain using a ceramic roulette to a circular stain.
7. Measurement of diameter of each stain (record the minimum diameter that incorporates the entire sport)
8. Calculate the average spot size (mm) from all 10 samples.

7. Seepage 1 week storage 40°C / 80 % RH

This test measures the amount of ink that will leak from the point of a ball pen when it is stored point down one week at 40°C / 80% RH. The test simulates keeping the pen in pocket of shirt close to human body. The process was as carried out as follows (test on 10 pens):

1. Ball pen start = make pen write to decrease its viscosity.
2. Wipe ink from the point with non fluffy paper
3. Store the Ball pen 7 days point down @ 40°C / 80% RH
4. Transfer ink drop from the pen point to a paper. Rotate the point of each pen on the test sheet 360°, transferring any ink seepage to the test sheet.
5. Cover the seepage display with a strip of transparent tape
6. Spread the ink stain using a ceramic roulette to a circular stain.
7. Measurement of diameter of each stain (record the minimum diameter that incorporates the entire sport)
8. Calculate the average spot size (mm) from all 10 samples.

8. Machine writing cleanliness

This test evaluates the machine write quality of pens under given test conditions during the first 20 meters of machine writing.

Equipment:

1. Air conditioned and humidity controlled room: 23 °C (±2°) 50% RH (±5%)
2. Writing machine operated according to the following guidelines:

   a) General conditions:

      70° writing angle (0, +10)
      100 mm circle circumference
      Total weight pen / holder / additional weight: 140-160 grams
      ISO 12757 test paper

   Writing surface of polished stainless steel with felt underneath

   b) Machine Parameters:

      4.5 m/min writing speed (± 0.5)
      0.6 mm spacing between circles (± 0.2) on Minitek APC or position 5 on Mikron 1 axial pen rotation per 100 circles
      Writing length : 20 meters

   c) Process:

      1. Place cartridges in barrels
      2. Draw loops to start pens
      3. Select the position with spacing 0.6 mm and record 20 meters over the counter

4. Run the test by pressing the "pens rotation"
5. Calculate average score on tested pens excluding pens which have not started.
6. Evaluate the cleanliness i.e. more or less uniform thickness on the line (presence of stains)

9. Machine writing regularity

This test evaluates the machine write quality of pens under given test conditions during the first 20 meters of machine writing.

Equipment:

1. Air conditioned and humidity controlled room: 23 °C (±2°) 50% RH (±5%)
2. Writing machine operated according to the following guidelines:

a) General conditions:

70° writing angle (0, +10)
100 mm circle circumference
Total weight pen / holder / additional weight: 140-160 grams
ISO 12757 test paper
Writing surface of polished stainless steel with felt underneath

b) Machine Parameters:

4.5 m/min writing speed (± 0.5)
0.6 mm spacing between circles (± 0.2) on Minitek APC or position 5 on Mikron 1 axial pen rotation per 100 circles
Writing length : 20 meters

c) Process:

1. Place cartridges in barrels
2. Draw loops to start pens
3. Select the position with spacing 0.6 mm and record 20 meters over the counter
4. Run the test by pressing the "pens rotation"
5. Calculate average score on tested pens excluding pens which have not started.
6. Evaluate the regularity i.e. more or less uniform color when writing (presence of white in lines)

10. Complete ink restitution

This test reflects the "mileage" of a pen, i.e. the capacity of the pen to write until it stops writing. Samples are marked "Yes" when the pen wrote until its cartridge was completely empty. Otherwise, the sample was marked as "No".

11. Handwriting cleanliness

This test measures the uniformity in thickness of a written line. The regularity of the written line thickness was visually assessed and rated in intervals of 1. The rating scale was as follows:

10: very clean, no excess, no stains,
0: not clean, excess and ink stains on the written lines

12. Handwriting regularity

This test measures the uniformity of color when writing. The samples were visually inspected for lighter or darker areas and "channels" in the middle of a line. The rating scale was as follows, with intervals of 1:

10: very regular, no white in the line,
0: not regular

13. Gooping

This test assesses whether ink drops from the point after manual writing. It is a visual assessment of the point after writing one sentence.

**Example 1**

Following the procedure outlined for the third aspect of the disclosure, the following non-aqueous writing ink was prepared:

| Component | Primary Function | Content in wt. % |
|---|---|---|
| Tego Airex 900 | Defoamer | 0.05% |
| Solvent Red 49 | Dye | 2.5% |
| Solvent Black 46 at 50% in phenoxyethanol | Dye | 30% |
| Lonzest SOC | Additive (clear drain) | 1.3% |
| SK resin | Binder (Newtonian) | 12.5% |
| Aerosil 200 at 10% in 1-phenoxy-2-propanol | Silica (part of gelling system) | 4% |
| PVP K80 | Elastic agent | 0.15% |
| Crayvallac Super at 4% in 1-phenoxy-2-propanol | Fatty acid amide wax (part of gelling system) | 6.5% |
| 1-phenoxy-2-propanol | Solvent | ad 100 % |
| Total | | 100 |

The rheological properties of the ink according to Example 1 were as follows:

- Viscosity at rest = 74990cP
- Viscosity under shear = 2765 cP
- Tan delta at rest = 6.9
- Tan delta after shear = 29.7

**Example 2 and Comparative Examples 1 to 9**

Further non-aqueous writing inks were prepared as described for Example 1 with the only variable being the composition of the ink as shown below. Dyes, defoamer, and clear drain additives remained unchanged. The prepared inks were injected into the cartridges. All experimental tests have been done on stabilized cartridges, i.e. after conditioning after injection for at least one week of storage at 23 °C and 50% RH. This time point is called T=0. The writing system is a retractable cartridge with a needle tip of 1mm.

Below table 1 shows the compositions used, including the above Example 1 for reference:

| Example | SK resin (wt.-%) | KTR 123 resin (wt.-%) | Crayvallac Super (wt.-%) | PVP K80 (wt.-%) | Aerosil 200 (wt.-%) |
|---|---|---|---|---|---|
| Example 1 | 12.5 | 0 | 0.26 | 0.15 | 0.4 |
| Example 2 | 12.15 | 0 | 0.26 | 0.5 | 0.4 |
| Comparative Example 1 | 12.5 | 0.15 | 0.26 | 0 | 0.4 |
| Comparative Example 2 | 12.5 | 0 | 0.26 | 0.15 | 0 |

(continued)

| Example | SK resin (wt.-%) | KTR 123 resin (wt.-%) | Crayvallac Super (wt.-%) | PVP K80 (wt.-%) | Aerosil 200 (wt.-%) |
|---|---|---|---|---|---|
| Comparative Example 3 | 12.5 | 0 | 0 | 0.15 | 0.4 |
| Comparative Example 4 | 0 | 0 | 0.36 | 0.15 | 0.4 |
| Comparative Example 5 | 11.65 | 0 | 0.26 | 1 | 0.4 |
| Comparative Example 6 | 7.65 | 0 | 0.26 | 5 | 0.4 |
| Comparative Example 7 | 0 | 0 | 0.36 | 0.7 | 0.4 |
| Comparative Example 8 | 0 | 0 | 0.46 | 0.15 | 0 |
| Comparative Example 9 | 0.7 | 0 | 0.42 | 0 | 0.4 |

The performance of the Examples and the Comparative Examples is indicated in Fig. 1.

As evident from a comparison of Comparative Example 1 and Example 1, replacing 0.15 wt.-% of the SK resin binder with 0.15 wt.-% of a homo or copolymer of vinylpyrrolidone avoids the problem of gooping of the ink while providing a very acceptable balance of other writing performance criteria. Without wishing to be bound by theory, the presence of a homo or copolymer of vinylpyrrolidone is believed to modify the gelling network such that the dynamic viscosity returns rapidly to the viscosity at rest immediately after the writing event and, thus, avoids gooping. As evident from Comparative Examples 5 to 7, replacing the SK resin binder with more than 0.6 wt.-% of a homo or copolymer of vinylpyrrolidone destroys this effect and gooping returns. Further increasing the level of the homo or copolymer of vinylpyrrolidone (Comp. Ex. 5) again changes the gelling network such that gooping is avoided, but then the hand- and machine writing regularity becomes unacceptably low. The table in Fig. 1 further shows that overall performance is best when a resin is used in combination with the homo or copolymer of vinylpyrrolidone, the fatty acid amide wax and the hydrophilic silica.

Although specific embodiments of the present disclosure have been disclosed for illustrative purposes, those skilled in the art will appreciate that various modifications and alterations are possible, without departing from the spirit of the present disclosure. It is also to be understood that such modifications and alterations are incorporated in the scope of the present disclosure and the accompanying claims.

## Claims

1. A writing instrument, in particular a pen such as a ball-pen, containing a non-aqueous writing ink which comprises a solvent, a coloring agent, a resin, a gelling agent, and a homo or copolymer of vinylpyrrolidone,
wherein the gelling agent comprises a mixture of silica particles and of a fatty acid amide wax, and
wherein the homo or copolymer of vinylpyrrolidone is present in amounts of between 0.05 and 0.6 wt.-%, relative to the total weight of the ink.

2. The writing instrument of claim 1, wherein the homo or copolymer of vinylpyrrolidone is polyvinylpyrrolidone.

3. The writing instrument of claim 2, wherein the polyvinylpyrrolidone has a weight-average molecular weight of above about 200 kDa, specifically between about 400 and about 2300 kDa, more specifically between about 450 and about 2000 kDa, and in particular between about 600 and about 1900 kDa.

4. The writing instrument of any one of claims 1 to 3, wherein the amount by weight of the homo or copolymer of vinylpyrrolidone is lower than the amount by weight of the mixture of silica particles and of a fatty acid amide wax.

5. The writing instrument of any one of claims 1 to 4, wherein the silica particles comprise hydrophilic silica particles,

and in particular wherein the hydrophilic silica particles are present in an amount of between about 0.10 and about 0.60 wt.-%, relative to the total weight of the ink.

**6.** The writing instrument of any one of claims 1 to 5, wherein the fatty acid amide wax comprises an N,N'-ethylene-bis-fatty acid amide, in particular an octadecanamide of the following formula (I)

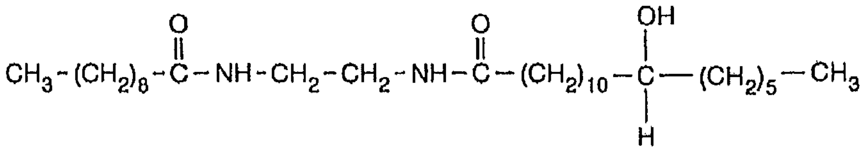

(I).

**7.** The writing instrument of any one of claims 1 to 6, wherein the gelling agent is present in amounts of between about 0.1 and about 1.2 wt.-%, more specifically between about 0.15 and about 0.60 wt.-%, relative to the total weight of the ink.

**8.** The writing instrument of any one of claims 1 to 7, wherein the solvent is selected from the group consisting of glycol ethers, alcohols, and mixture thereof; more specifically wherein the solvent is a polyethylene glycol ether, a polypropylene glycol ether, phenoxyethanol, 1-phenoxy-2-propanol, or mixtures thereof.

**9.** The writing instrument of any one of claims 1 to 8, wherein the solvent is present in amounts of between about 35 and about 80 wt.-%, more specifically between about 45 and about 75 wt.-%, relative to the total weight of the ink.

**10.** The writing instrument of any one of claims 1 to 9, wherein the coloring agent is a dye, in particular a dye selected from the group consisting of azoic dyes, triarylmethane dyes, phthalocyanine derivatives dyes, xanthene dyes and mixture thereof.

**11.** The writing instrument of any one of claims 1 to 10, wherein the coloring agent is present in amounts of between about 5 and about 30 wt.-%, in particular between about 7 and about 28 wt.-%, relative to the total weight of the ink.

**12.** The writing instrument of any one of claims 1 to 11, wherein the non-aqueous writing ink further comprises one or more additives, in particular one or more additives selected from the group consisting of thickening agents, clear drain agents, viscosity imparting agents, lubricants, dispersing agents and mixture thereof.

**13.** The writing instrument of any one of claims 1 to 12, wherein the non-aqueous writing ink which comprises in amounts relative to the total weight of the ink:

between about 0.1 and about 0.6 wt.-% polyvinylpyrrolidone having a weight-average molecular weight of between about 450 and about 2000 kDa;
between about 0.15 and about 0.60 wt.-% of the fatty acid amide wax; and
between about 0.15 and about 0.60 wt.-% hydrophilic silica.

**14.** The writing instrument of any one of claims 1 to 13, wherein the non-aqueous writing ink comprises a resin selected from polyester resins, polyurethane resins, ketone resins, ether resins, and mixtures thereof; and wherein the resin is optionally present in an amount of between about 3 and about 30%, specifically between about 3 and about 25%, and in particular between about 5 to about 20%, relative to the total weight of the ink.

**15.** The writing instrument of claim 14, wherein the ink comprises between about 55 and about 75 wt.-% of 1-phenoxy-2-propanol.

**16.** The writing instrument of claim 14 or claim 15, wherein the fatty acid amide wax comprises an N,N'-ethylene-bis-fatty acid amide, in particular an octadecanamide of the following formula (I)

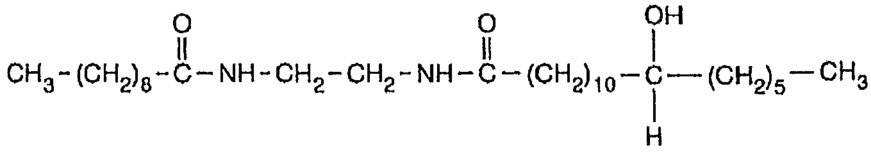

(I).

**17.** The writing instrument of any one of claims 1 to 16, wherein the ink has a loss factor tan δ at rest of between about 3 and about 15, more specifically between about 4 and about 12, and in particular between about 5 and about 10, in particular a loss factor after shear of between about 8 and about 60, more specifically between about 11 and about 50, and in particular between about 15 and about 40.

**18.** The writing instrument of any one of claims 1 to 17, wherein the non-aqueous writing ink which consists the following components in amounts relative to the total weight of the ink:

about 55 to about 75 wt.-% of the solvent is selected from a polyethylene glycol ether, a polypropylene glycol ether, phenoxyethanol, -phenoxy-2-propanol, or mixtures thereof;
about 10 to about 30 wt.-% of the coloring agent;
about 0.10 to about 0.60 wt.-% polyvinylpyrrolidone having a weight-average molecular weight of between about 600 and about 1900 kDa;
about 0.15 to about 0.60 wt.-% fatty acid amide wax;
about 0.15 to about 0.60 wt.-% hydrophilic silica;
and the remainder of components being selected from resins and additives.

**19.** The writing instrument of claim 18, wherein the non-aqueous writing ink which comprises the following components in amounts relative to the total weight of the ink:

about 55 to about 75 wt.-% of the 1-phenoxy-2-propanol;
about 10 to about 30 wt.-% of the coloring agent;
about 0.10 to about 0.60 wt.-% polyvinylpyrrolidone having a weight-average molecular weight of between about 600 and about 1900 kDa;
about 0.15 to about 0.60 wt.-% fatty acid amide wax comprises a N,N'-ethylene-bis-fatty acid amide, in particular a N,N'-ethylene-bis-fatty acid amide having the following formula (I)

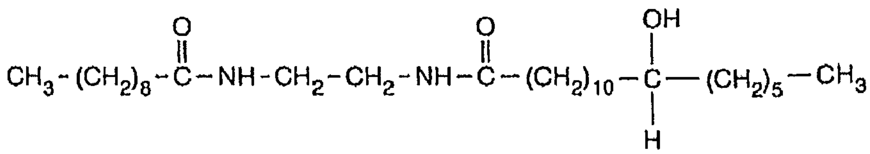

(I);

about 0.15 to about 0.60 wt.-% hydrophilic silica;
about 5 to about 15 wt.-% of a resin; and
the remainder of components being additives.

**20.** A non-aqueous writing ink comprising a solvent, a coloring agent, a resin, a gelling agent, and a homo or copolymer of vinylpyrrolidone, wherein the gelling agent is a mixture of silica particles and of a fatty acid amide wax, and wherein the homo or copolymer of vinylpyrrolidone is present in amounts of between about 0.05 and about 0.6 wt.-%, relative to the total weight of the ink.

**21.** A process of preparing the writing instrument of any one of claims 1 to 19 or the non-aqueous writing ink according to claim 20, wherein a non-aqueous writing ink comprising a solvent, a coloring agent, a resin, a gelling agent, and a homo or copolymer of vinylpyrrolidone, wherein the gelling agent comprises a mixture of silica particles and of a fatty acid amide wax, and wherein the homo or copolymer of vinylpyrrolidone is present in amounts of between 0.05 and 0.6 wt.-%, relative to the total weight of the ink; is prepared by:

a) forming a first premix comprising silica particles in a solvent at a temperature of between about 30 and about 70°C with a shear rate of between about 20 and about 25 m/s;

b) combining the first premix with the remainder of the components of the non-aqueous writing ink.

| Example | Seepage 23°C - 24h storage | Seepage 1 week storage 40°C/80% RH | Machine writing cleanliness | Machine writing regularity | Complete ink restitution | Hand writing cleanliness | Hand writing regularity | Gooping |
|---|---|---|---|---|---|---|---|---|
| Example 1 | 1.1 | 1 | 10 | 8.5 | Yes | 9.5 | 7.5 | No |
| Example 2 | 0.9 | 0.7 | 8.75 | 8.75 | Yes | 10 | 7.5 | No |
| Comparative Example 1 | 1.1 | 1.2 | 8 | 7.5 | Yes | 10 | 9.5 | Yes |
| Comparative Example 2 | 3.3 | 2 | 9 | 8.25 | Yes | 10 | 7.5 | No |
| Comparative Example 3 | 1 | 1.3 | 9.5 | 7.8 | Yes | 10 | 7.5 | No |
| Comparative Example 4 | 1.7 | 1.3 | 9 | 7.8 | Yes | 8.5 | 8.5 | Yes |
| Comparative Example 5 | 1 | 0.7 | 8.5 | 7.5 | Yes | 10 | 5 | Yes |
| Comparative Example 6 | 0.5 | 1 | 10 | 2.5 | Yes | 10 | 1.5 | No |
| Comparative Example 7 | 1.3 | 1 | 9.75 | 5 | Yes | 9.5 | 8 | Yes |
| Comparative Example 8 | 7,8 | 14,1 | 10 | 8,25 | Yes | 9 | 9 | Yes |
| Comparative Example 9 | 1,3 | 9,8 | 10 | 8,25 | No | 9 | 10 | Yes |

**Fig.1**

Europäisches Patentamt
European Patent Office
Office européen des brevets

# EUROPEAN SEARCH REPORT

Application Number
EP 20 31 5027

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 3 502 197 A1 (SOC BIC [FR]) 26 June 2019 (2019-06-26) * columns -, paragraphs * ----- | 1-21 | INV. C09D11/18 C09D11/16 |
| A | EP 1 101 804 A1 (PILOT KK [JP]) 23 May 2001 (2001-05-23) * columns -, paragraphs * ----- | 1-21 | |
| A | EP 1 101 805 A1 (PILOT KK [JP]) 23 May 2001 (2001-05-23) * columns -, paragraphs * ----- | 1-21 | |
| A | WO 2010/052729 A1 (SHAH MANISH BABULAL [IN]; SHAH SWETAL MANISH [IN] ET AL.) 14 May 2010 (2010-05-14) * columns -, paragraphs * ----- | 1-21 | |

TECHNICAL FIELDS SEARCHED (IPC)

C09D

The present search report has been drawn up for all claims

1

| Place of search | Date of completion of the search | Examiner |
|---|---|---|
| Munich | 15 July 2020 | Schmitz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 31 5027

This annex lists the patent family members relating to the patent documents cited in the above-mentioned European search report. The members are as contained in the European Patent Office EDP file on
The European Patent Office is in no way liable for these particulars which are merely given for the purpose of information.

15-07-2020

| Patent document cited in search report | Publication date | Patent family member(s) | Publication date |
| --- | --- | --- | --- |
| EP 3502197 A1 | 26-06-2019 | AR 113661 A1 | 27-05-2020 |
| | | CN 111344365 A | 26-06-2020 |
| | | EP 3502197 A1 | 26-06-2019 |
| | | WO 2019122017 A1 | 27-06-2019 |
| EP 1101804 A1 | 23-05-2001 | DE 60018356 T2 | 04-08-2005 |
| | | EP 1101804 A1 | 23-05-2001 |
| | | JP 3327466 B2 | 24-09-2002 |
| | | JP 2001139867 A | 22-05-2001 |
| | | US 6503966 B1 | 07-01-2003 |
| EP 1101805 A1 | 23-05-2001 | DE 60011736 T2 | 14-07-2005 |
| | | EP 1101805 A1 | 23-05-2001 |
| | | JP 3327465 B2 | 24-09-2002 |
| | | JP 2001139866 A | 22-05-2001 |
| | | US 6479568 B1 | 12-11-2002 |
| WO 2010052729 A1 | 14-05-2010 | CN 102203198 A | 28-09-2011 |
| | | US 2011218282 A1 | 08-09-2011 |
| | | WO 2010052729 A1 | 14-05-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3078172 B
- JP H07196972 B
- WO 2019122017 A1